# EUROPEAN PATENT APPLICATION

(11) **EP 1 962 445 A2**
(43) Date of publication of application: **27.08.2008**
(21) Application number: 08003146.1
(22) Date of filing: 20.02.2008
(51) Int. Cl.: H04B 10/155

(54) **Optical transmitter**

(30) Priority: 26.02.2007 JP 2007045198
(71) Applicant: Yokogawa Electric Corporation, Tokyo 180-8750 (JP)
(72) Inventor: Asano, Tetsuri, Musashino-shi Tokyo 180-8750 (JP)
(74) Representative: Grünecker, Kinkeldey, Stockmair & Schwanhäusser Anwaltssozietät

(57) **Abstract**

An optical transmitter for carrying out an optical modulation based on a data signal to be transmitted, thereby generating a transmission light signal, includes an optical phase modulating section for carrying out an optical phase modulation over an output light of a light source based on a data signal, an optical pulse modulating section for carrying out an optical pulse modulation over an output light of the optical phase modulating section based on a clock signal and outputting the light as an optical transmission output, an extending section for extending a code transition time of the data signal and applying the data signal to the optical phase modulating section, and a phase control section for modulating a phase shift amount of the data signal or the clock signal with a dither signal and carrying out a synchronous detection over the optical transmission output, and controlling the phase shift amount with a synchronous detection signal.

## Description

This application claims priority to Japanese Patent Application No. 2007-045198, filed February 26, 2007, in the Japanese Patent Office. The Japanese Patent Application No. 2007-045198 is incorporated by reference in its entirety.

### TECHNICAL FIELD

The present disclosure relates to an optical transmitter for carrying out an optical modulation based on a data signal to be transmitted, thereby generating a transmission light signal, and more particularly to an optical transmitter capable of synchronizing the data signal and a clock signal with high precision.

### RELATED ART

The prior art document related to a conventional optical transmitter for carrying out an optical modulation based on a data signal to be transmitted, thereby generating a transmission light signal is as follows.

[Patent Document 1] JP-A-05-289125 Publication
[Patent Document 2] JP-A-11-004196 Publication
[Patent Document 3] JP-A-2000-089179 Publication
[Patent Document 4] JP-A-2000-332692 Publication
[Patent Document 5] JP-A-2003-008510 Publication

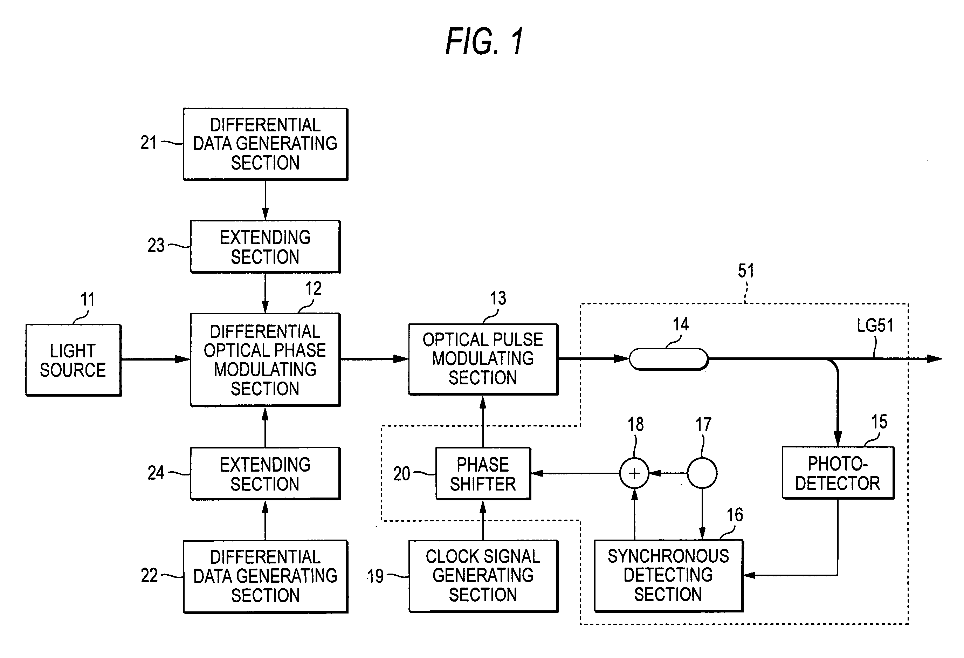

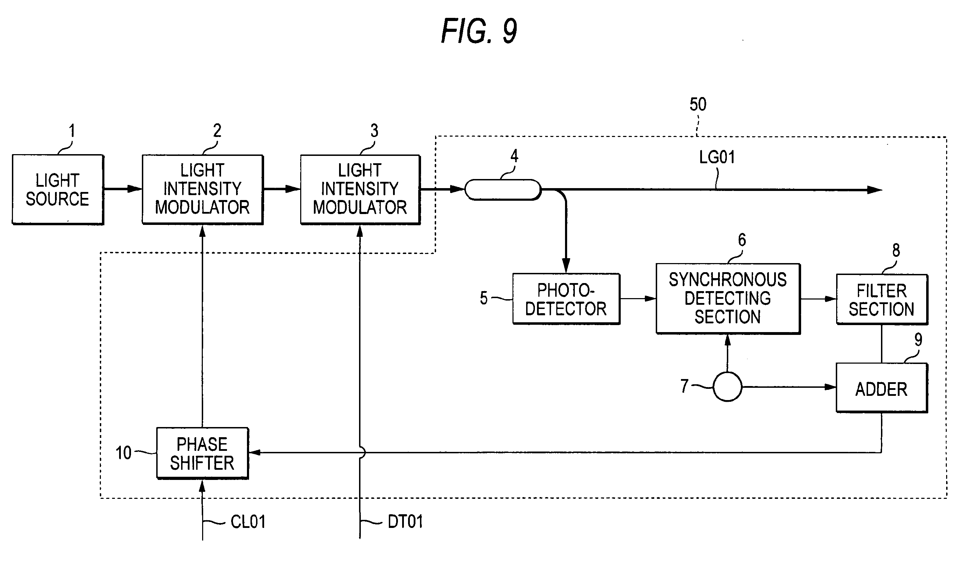

Fig. 9 is a block diagram showing a structure according to an example of a conventional optical transmitter. In Fig. 9, 1 denotes a light source, 2 denotes a light intensity modulator for a clock signal, 3 denotes a light intensity modulator for a data signal, 4 denotes an optical dividing section such as an optical coupler, 5 denotes a photodetector such as a photodiode, 6 denotes a synchronous detecting section, 7 denotes an oscillator for generating a dither signal, 8 denotes a filter section such as a lowpass filter, 9 denotes an adder, and 10 denotes a phase shifter. Moreover, 4, 5, 6, 7, 8, 9 and 10 constitute a phase control section 50.

A light output of the light source 1 is incident on the light intensity modulator 2, and a light emitted from the light intensity modulator 2 is incident on the light intensity modulator 3. A light emitted from the light intensity modulator 3 is incident on the optical dividing section 4, and one of lights emitted from the optical dividing section 4 is output as an optical transmission output as shown in "LG01" of Fig. 9 and the other light emitted from the optical dividing section 4 is incident on the photodetector 5.

An output of the photodetector 5 is applied to a signal input terminal of the synchronous detecting section 6, and an output of the oscillator 7 is applied to a synchronous signal input terminal of the synchronous detecting section 6. An output of the synchronous detecting section 6 is applied to one of input terminals of the adder 9 through the filter section 8, and an output of the oscillator 7 is applied to the other input terminal of the adder 9. Moreover, an output of the adder 9 is applied to a control input terminal of the phase shifter 10.

On the other hand, a clock signal (an RZ (Return Zero) clock pulse signal) indicated as "CL01" of Fig. 9 is applied to a control input terminal of the light intensity modulator 2 through the phase shifter 10, and a data signal (an NRZ (Non Return Zero) data signal) indicated as "DT01" of Fig. 9 is applied to a control input terminal of the light intensity modulator 3.

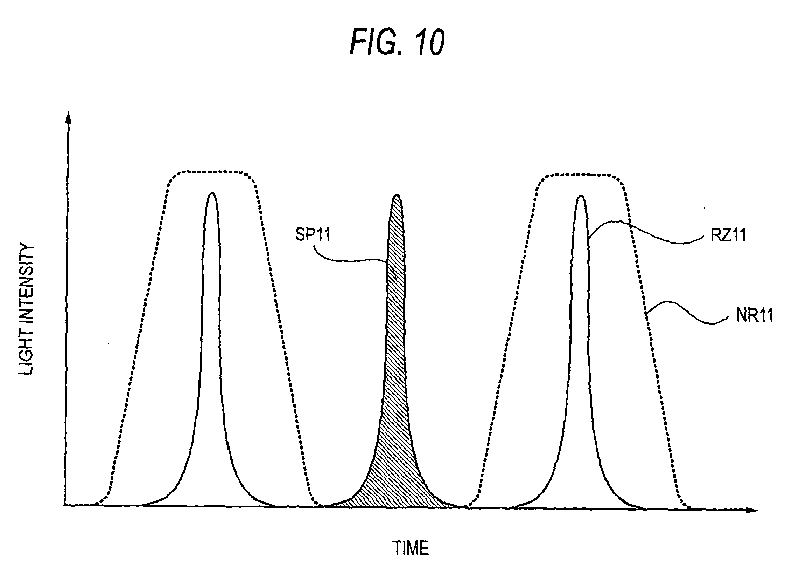

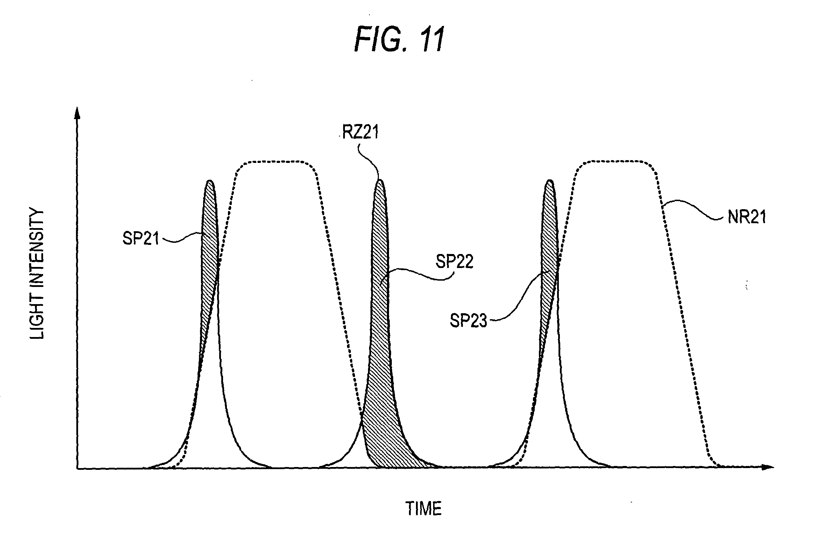

An operation according to the conventional example shown in Fig. 9 will be described with reference to Figs. 10 and 11. Fig. 10 is an explanatory chart for explaining a light intensity in the case in which a data signal and a clock signal are synchronized with each other, and Fig. 11 is an explanatory chart for explaining a light intensity in the case in which the data signal is shifted from the clock signal.

The output light of the light source 1 is pulsed based on the clock signal indicated as "CL01" in Fig. 9 in the light intensity modulator 2 (which generates a phase shift in a phase shift amount modulated with a dither signal), and the output (pulse signal) of the light intensity modulator 2 is subjected to a data modulation (a light intensity modulation) based on the data signal indicated as "DT01" in Fig. 9 in the light intensity modulator 3 and is output as the light transmission output indicated as "LG01" in Fig. 9.

On the other hand, a light intensity (an average of the light intensity) of the light signal output divided by the optical dividing section 4 is converted into an electric signal through the photodetector 5, and the electric signal is synchronously detected based on a dither signal to be an output of the oscillator 7.

More specifically, the phase shift amount is modulated with the dither signal. Therefore, an error signal in the phase shift amount is detected by the synchronous detection with the dither signal.

A high frequency component is removed from the synchronous detection signal (the error signal) through the filter section 8 such as a lowpass filter, and the output (the- dither signal) of the oscillator 7 is then added (modulated) through the adder 9. A result of the addition is applied to the control input terminal of the phase shifter 10 to control the phase shift amount.

For example, in the case in which the data signal and the clock signal are synchronized with each other through the control of the phase shift amount, a positional relationship between the data signal and the clock signal is obtained as shown in Fig. 10.

A data signal (an NRZ data signal) indicated as "NR11" in Fig. 10 and a clock signal (an RZ clock pulse signal) indicated as "RZ11" in Fig. 10 are synchronized with each other. Therefore, an average of a light intensity in which a pulse indicated as "SP11" in Fig. 10 is suppressed is detected through the photodetector 5.

On the other hand, in the case in which the data signal is asynchronized from the clock signal, a data signal (an NRZ data signal) indicated as "NR21" in Fig. 11 is asynchronized from a clock signal (an RZ clock pulse signal) indicated as "RZ21" in Fig. 11. Therefore, an average of a light intensity in which the pulses indicated as "SP21", "SP22" and "SP23" in Fig. 11 are suppressed is detected through the photodetector 5.

As is apparent from Figs. 10 and 11, the average of the light intensity detected in the case in which the asynchronization is carried out as shown in Fig. 11 is lower than that of the light intensity detected in the synchronizing state shown in Fig. 10. More specifically, the average of the light intensity is varied by approximately a double depending on the presence of the synchronization.

More specifically, by controlling the phase shift amount of the phase shifter 10 in order to increase the average of the light intensity detected through the photodetector 5, it is possible to synchronize the data signal and the clock signal with high precision.

As a result, by modulating the phase shift amount of the clock signal with the dither signal, converting a part of the optical transmission output into the electric signal to carry out a synchronous detection based on the dither signal and controlling the phase shift amount of the clock signal with the synchronous detection signal, it is possible to synchronize the data signal and the clock signal with high precision.

In the conventional example shown in Fig. 9, moreover, the optical transmitter in which the light intensity modulation is carried out with the data signal and the clock signal is effective for the case in which the detection sensitivity of the synchronizing state is high and the data signal and the clock signal are synchronized with each other.

In recent years, furthermore, attention has been paid to a method of pulsing, with a clock signal, a differential phase modulation (DPSK : Differential Phase Shift Keying) signal which can be transmitted with a small error even if an average light intensity level is reduced in an optical receiver.

However, the differential phase modulation signal substantially has no intensity modulation. For this reason, there is a problem in that it is hard to synchronize a signal detected through a photodetector with a clock signal. More specifically, a code change has no change in a light intensity. Therefore, a countermeasure cannot be taken through the conventional example shown in Fig. 9.

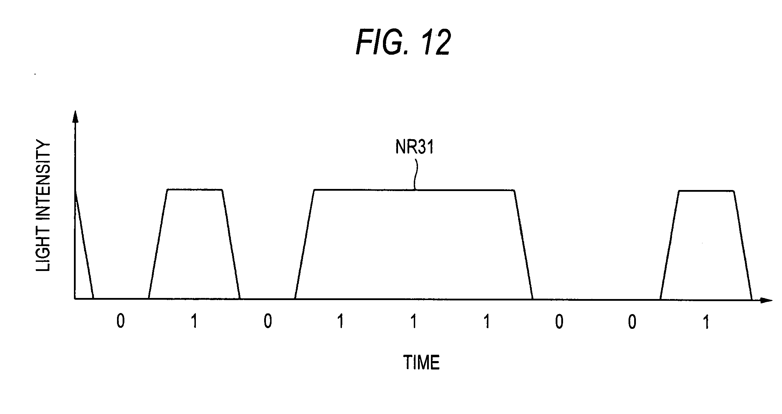

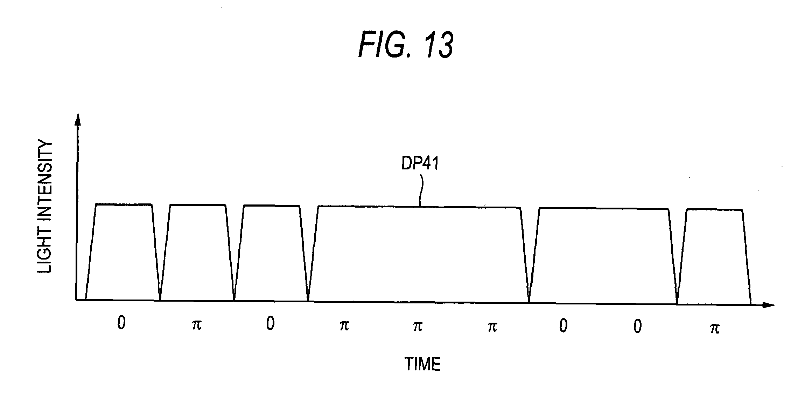

In the case of a differential optical phase modulation signal generated through an optical modulator of a push-pull type, moreover, a change in a light intensity in a code change instantaneously becomes extremely small. Fig. 12 is a timing chart showing an example of the light intensity modulation signal (the NRZ signal) and Fig. 13 is a timing chart showing an example of the differential optical phase modulation signal generated through the optical modulator of a push-pull type.

In the case of a light intensity modulation signal indicated as "NR31" in Fig. 12, it is possible to synchronize the data signal with the clock signal with the structure according to the conventional example shown in Fig. 9. In the case of a differential optical phase modulation signal indicated as "DP41" in Fig. 13, however, a change in a light intensity in a code change is obtained in a very short time, and an S/N ratio of an error signal cannot be taken sufficiently so that it is very hard to synchronize the data signal with the clock signal.

When an amplitude level of the dither signal for modulating the clock signal is increased in order to sufficiently take the S/N ratio of the error signal, moreover, there is a problem in that a pulse waveform greatly fluctuates on a temporal axis and a fiber transmitting characteristic or a receiving characteristic is influenced adversely.

### SUMMARY

Exemplary embodiments of the present invention an optical transmitter capable of synchronizing a data signal and a clock signal with high precision.
A first aspect of the invention is directed to an optical transmitter for carrying out an optical modulation based on a data signal to be transmitted, thereby generating a transmission light signal, comprising:
an optical phase modulating section for carrying out an optical phase modulation over an output light of a light source based on the data signal; an optical pulse modulating section for carrying out an optical pulse modulation over an output light of the optical phase modulating section based on a clock signal and outputting the light as an optical transmission output; an extending section for extending a code transition time of the data signal and applying the data signal to the optical phase modulating section; and a phase control section for modulating a phase shift amount of the data signal or the clock signal with a dither signal and carrying out a synchronous detection over the optical transmission output, and controlling the phase shift amount with a synchronous detection signal. Consequently, it is possible to synchronize the data signal and the clock signal with high precision.

A second aspect of the invention is directed to the optical transmitter according to the first aspect of the invention, wherein the optical phase modulating section carries out the optical phase modulation over the output light of the light source based on differential data signals in opposite phases to each other,
the optical pulse modulating section carries out the optical pulse modulation over the output light of the optical phase modulating section based on a differential clock signal and outputs the light as the optical transmission output,
the extending section includes two extending sections for extending code transition times of the differential data signals respectively and applying them to the optical phase modulating section, and
the phase control section includes two phase control sections for modulating the phase shift amount of the data signal or the clock signal with a dither signal, synchronously detecting the optical transmission output and controlling the phase shift amount with the synchronous detection signal. Consequently, it is possible to synchronize the data signal and the clock signal with high precision.

A third aspect of the invention is directed to the optical transmitter according to the first or second aspect of the invention, wherein the extending section is a lowpass filter. Consequently, it is possible to synchronize the data signal and the clock signal with high precision.

A fourth aspect of the invention is directed to the optical transmitter according to the first or second aspect of the invention, wherein the extending section is a driver amplifier for limiting a gain band. Consequently, it is possible to synchronize the data signal and the clock signal with high precision.

A fifth aspect of the invention is directed to an optical transmitter for carrying out an optical modulation based on a data signal to be transmitted, thereby generating a transmission light signal, comprising:
an optical phase modulating section for carrying out an optical phase modulation over an output light of a light source based on differential data signals in opposite phases to each other; an optical pulse modulating section for carrying out an optical pulse modulation over an output light of the optical phase modulating section based on a differential clock signal and outputting the light as an optical transmission output; a delay section for delaying one of the differential data signals and applying the differential data signal to the optical phase modulating section; and two phase control sections for modulating a phase shift amount of the data signal or the clock signal with a dither signal, synchronously detecting the optical transmission output and controlling the phase shift amount with a synchronous detection signal. Consequently, it is possible to synchronize the data signal and the clock signal with high precision.

A sixth aspect of the invention is directed to an optical transmitter for carrying out an optical modulation based on a data signal to be transmitted, thereby generating a transmission light signal, comprising:
a delay section for delaying the data signal to generate a delay data signal; an optical phase modulating section for carrying out an optical phase modulation over an output light of a light source based on the data signal and the delay data signal; an optical pulse modulating section for carrying out an optical pulse modulation over an output light of the optical phase modulating section based on a differential clock signal and outputting the light as an optical transmission output; and two phase control sections for modulating phase shift amounts of the data signal and the delay data signal or the clock signal with a dither signal and carrying out a synchronous detection over the optical transmission output, and controlling the phase shift amount with a synchronous detection signal. Consequently, it is possible to synchronize the data signal and the clock signal with high precision.

A seventh aspect of the invention is directed to an optical transmitter for carrying out an optical modulation based on a data signal to be transmitted, thereby generating a transmission light signal, comprising:
an optical phase modulating section for carrying out an optical phase modulation over an output light of a light source based on a data signal; an optical pulse modulating section for carrying out an optical pulse modulation over an output light of the optical phase modulating section based on a clock signal and outputting the light as an optical transmission output; an optical filter or an optical interferometer which is provided between the optical phase modulating section and the optical pulse modulating section; and a phase control section for modulating a phase shift amount of the data signal or the clock signal with a dither signal and carrying out a synchronous detection over the optical transmission output, and controlling the phase shift amount with a synchronous detection signal. Consequently, it is possible to synchronize the data signal and the clock signal with high precision.

An eighth aspect of the invention is directed to the optical transmitter according to the seventh aspect of the invention, wherein the optical phase modulating section carries out the optical phase modulation over the output light of the light source based on differential data signals in opposite phases to each other,
the optical pulse modulating section carries out the optical pulse modulation over the output light of the optical phase modulating section based on a differential clock signal and outputs the light as the optical transmission output, and
the phase control section includes two phase control sections for modulating the phase shift amount of the data signal or the clock signal with the dither signal, synchronously detecting the optical transmission output and controlling the phase shift amount with the synchronous detection signal. Consequently, it is possible to synchronize the data signal and the clock signal with high precision.

According to the invention, the following advantages can be obtained.
According to the first, second, third and fourth aspects of the invention, by extending the code transition times of the data signals (NRZ data signals) in the opposite phases to each other through the extending section to carry out the differential optical phase modulation, and furthermore, modulating the phase shift amount of the data signal or the clock signal with the dither signal and converting a part of the optical transmission output into an electric signal to carry out the synchronous detection based on the dither signal and controlling the phase shift amount of the data signal or the clock signal with the synchronous detection signal, it is possible to synchronize the data signal and the clock signal with high precision.

According to the fifth aspect of the invention, by giving a delay of a half bit or less to one of the data signals (the NR data signals) in the opposite phases to each other through the delay section to apply the data signal to the differential optical phase modulating section 12 and to modulate the phase shift amount of the data signal or the clock signal with the dither signal, converting a part of the optical transmission output into the electric signal to carry out the synchronous detection based on the dither signal and controlling the phase shift amount of the data signal or the clock signal with the synchronous detection signal, it is possible to synchronize the data signal and the clock signal with high precision.

According to the sixth aspect of the invention, by applying, to the differential optical phase modulating section 12, the data signal (the NRZ data signal) and the signal giving the delay of a half bit or less to the data signal (the NRZ data signal) through the delay section respectively, modulating the phase shift amount of the data signal or the clock signal with the dither signal, converting a part of the optical transmission output into the electric signal to carry out the synchronous detection based on the dither signal, and controlling the phase shift amount of the data signal or the clock signal with the synchronous detection signal, it is possible to synchronize the data signal and the clock signal with high precision.

According to the seventh and eighth aspects of the invention, by extending the code transition time of the output light in the differential optical phase modulating section through the optical filter or the optical interferometer which is provided between the differential optical phase modulating section and the optical pulse modulating section, and furthermore, modulating the phase shift amount of the data signal or the clock signal with the dither signal, converting a part of the optical transmission output into the electric signal to carry out the synchronous detection based on the dither signal, and controlling the phase shift amount of the data signal or the clock signal with the synchronous detection signal, it is possible to synchronize the data signal and the clock signal with high precision.
Other features and advantages may be apparent from the following detailed description, the accompanying drawings and the claims.

### BRIEF DESCRIPTION OF THE DRAWINGS

Fig. 1 is a block diagram showing a structure according to an example of an optical transmitter in accordance with the invention,
Figs. 2A to 2C are explanatory diagrams showing a relationship between a phase modulating light signal and a pulsed light signal,
Fig. 3 is a characteristic curve chart showing a relationship between a rise and fall time of a driving signal of modulating section and a detection sensitivity of an error signal,
Fig. 4 is a block diagram showing a structure according to another example of the optical transmitter in accordance with invention,
Fig. 5 is a block diagram showing a structure according to a further example of the optical transmitter in accordance with invention,
Fig. 6 is a block diagram showing a structure according to a further example of the optical transmitter in accordance with invention,
Fig. 7 is a block diagram showing a structure according to a further example of the optical transmitter in accordance with invention,
Fig. 8 is a block diagram showing a structure according to a further example of the optical transmitter in accordance with invention,
Fig. 9 is a block diagram showing a structure according to an example of a conventional optical transmitter,
Fig. 10 is an explanatory chart for explaining a light intensity in the case in which a data signal and a clock signal are synchronized with each other,
Fig. 11 is an explanatory chart for explaining a light intensity in the case in which the data signal and the clock signal are asynchronized from each other,
Fig. 12 is a timing chart showing an example of a light intensity modulation signal (an NRZ data signal), and
Fig. 13 is a timing chart showing an example of a differential optical phase modulation signal generated in an optical modulation of a push-pull type.

### DETAILED DESCRIPTION

The invention will be described below in detail with reference to the drawings. Fig. 1 is a block diagram showing a structure according to an example of an optical transmitter in accordance with the invention.
In Fig. 1, 11 denotes a light source, 12 denotes a differential optical phase modulating section to be an optical modulator for a data signal, 13 denotes an optical pulse modulating section to be an optical modulator for a clock signal, 14 denotes an optical dividing section to be an optical coupler, 15 denotes a photodetector such as a photodiode, 16 denotes a synchronous detecting section, 17 denotes an oscillator for generating a dither signal, 18 denotes an adder, 19 denotes a clock signal generating section for generating a clock signal (an RZ clock pulse signal), 20 denotes a phase shifter, 21 and 22 denote differential data generating sections to be data generating section which serves to generate data signals (NRZ data signals) in opposite phases to each other, and 23 and 24 denote extending sections such as a lowpass filter for extending a code transition time. Moreover, 14, 15, 16, 17, 18 and 20 constitute a phase control section 51.

A light output of the light source 11 is incident on the differential optical phase modulating section 12, and a light emitted from the differential optical phase modulating section 12 is incident on the optical pulse modulating section 13. A light emitted from the optical pulse modulating section 13 is incident on the optical dividing section 14, and one of lights emitted from the optical dividing section 14 is output as an optical transmission output as shown in "LG51" of Fig. 1 and the other light emitted from the optical dividing section 14 is incident on the photodetector 15.

An output of the photodetector 15 is applied to a signal input terminal of the synchronous detecting section 16, and an output of the oscillator 17 is applied to a synchronous signal input terminal of the synchronous detecting section 16. An output of the synchronous detecting section 16 is applied to one of input terminals of the adder 18, and an output of the oscillator 17 is applied to the other input terminal of the adder 18. Moreover, an output of the adder 18 is applied to a control input terminal of the phase shifter 20.

On the other hand, the data signals (the NRZ data signals) in the opposite phases to each other which are output of the differential data generating sections 21 and 22 are applied to a differential control input terminal of the differential optical phase modulating section 12 through the extending sections 23 and 24 respectively, and the clock signal (the RZ clock pulse signal) to be the output of the clock signal generating section 19 is applied to a control input terminal of the optical pulse modulating section 13 through the phase shifter 20.

The differential optical phase modulating section 12 is differentially operated and the pulse modulating section 13 also carries out a differential operation based on a differential clock signal, thereby carrying out optical pulsing. For simplicity of the explanation, an application of the clock signal to the optical pulse modulating section 13 on only one side (the differential data generating section 22 side) is described and the description of a circuit structure on the other side (the differential data generating section 21 side) is omitted.

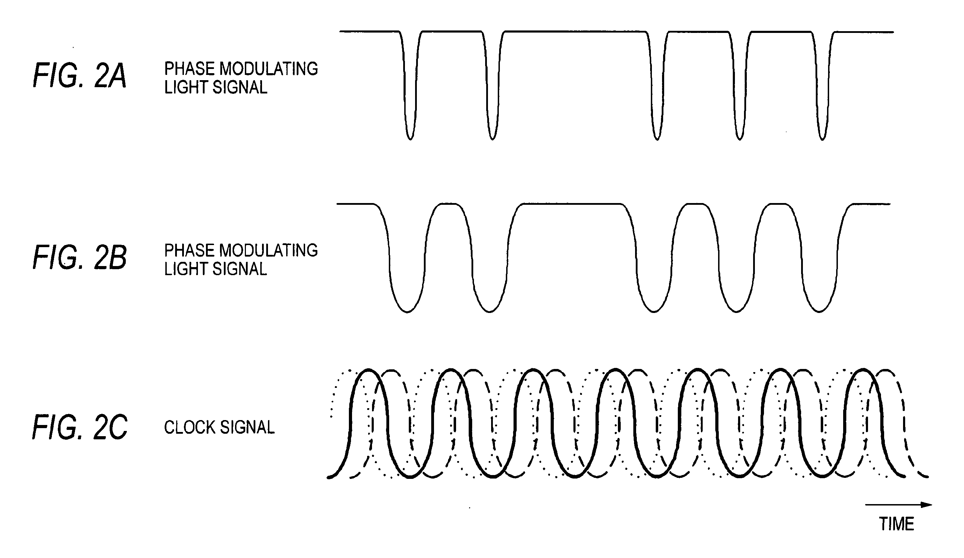

An operation according to the example shown in Fig. 1 will be described with reference to Figs. 2A to 2C. Figs. 2A to 2C are explanatory diagrams showing a relationship between a phase modulating light signal and a pulsed light signal. For simplicity of the explanation, an operation on one of the sides (the sides of the differential data generating section 22 and the clock signal generating section 19) will be described in place of the differential operation.

The output light of the light source 11 is subjected to the differential optical phase modulation with the data signals (the NRZ data signals) in the opposite phases to each other in the differential optical phase modulating section 12 and is pulsed based on the clock signal in the optical pulse modulating section 13 (which generates a phase shift in a phase shift amount which is modulated with the dither signal), and is output as an optical transmission output indicated as "LG51" in Fig. 1.

Referring to the data signals (the NRZ data signals) in the opposite phases to each other, the code transition time is extended by the extending sections 23 and 24. Therefore, the output light of the differential optical phase modulating section 12 is a light signal having a very small code transition time shown in Fig. 2A without the extending sections 23 and 24. On the other hand, the output light of the differential optical phase modulating section 12 is a light signal having a code transition time extended as shown in Fig. 2B through the extending sections 23 and 24.

Moreover, the pulsed light signal which is optically pulsed in the optical pulse modulating section 13 is a light signal subjected to a modulation (dithering) with a dither signal as shown in Fig. 2C.

On the other hand, a light intensity (an average of the light intensity) of the light signal output divided by the optical dividing section 14 is converted into an electric signal through the photodetector 15, and the electric signal is synchronously detected based on the dither signal to be the output of the oscillator 17 in the synchronous detecting section 16.

More specifically, the phase shift amount is modulated with the dither signal. By carrying out the synchronous detection with the dither signal, therefore, an error signal in the phase shift amount is detected.

The output of the oscillator 17 (the dither signal) is added (modulated) to the synchronous detection signal (the error signal) through the adder 18, and a result of the addition is applied to the control input terminal of the phase shifter 20 to control the phase shift amount.

Moreover, the phase modulating light signal in Fig. 2B has a code transition time extended. As compared with the phase modulating light signal in Fig. 2A, therefore, an S/N ratio of the error signal can be set to be higher. In other words, it is possible to increase a detection sensitivity in a synchronizing state (the error signal).

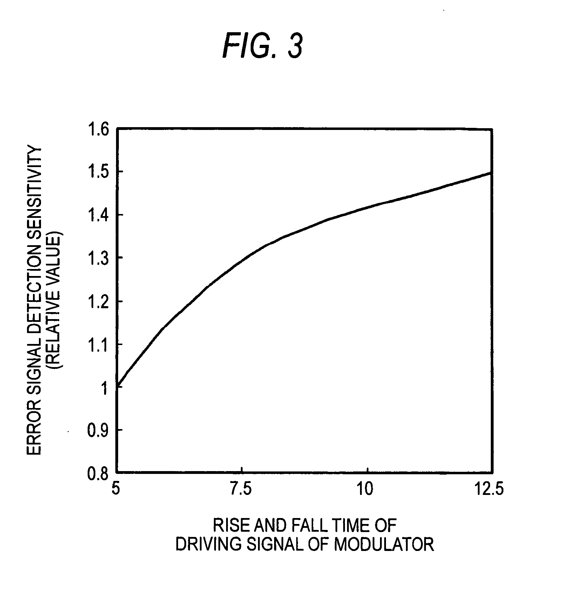

For example, Fig. 3 is a characteristic curve chart showing a relationship between a rise and fall time of a driving signal of modulating section and a detection sensitivity of an error signal. In the case in which the driving signal is set to be "40 Gb/s", it is apparent that the detection sensitivity in the synchronizing state (the error signal) is enhanced by prolonging the rise and fall time of the driving signal, that is, increasing the code transition time as shown in Fig. 3.

As a result, the code transition times of the data signals (the NRZ data signals) in the opposite phases to each other are extended by the extending section to carry out the differential optical phase modulation. Furthermore, the phase shift amount of the clock signal is modulated with the dither signal, a part of the optical transmission output is converted into an electric signal to carry out the synchronous detection based on the dither signal, and the phase shift amount of the clock signal is controlled with the synchronous detection signal. Consequently, it is possible to synchronize the data signal and the clock signal with high precision.

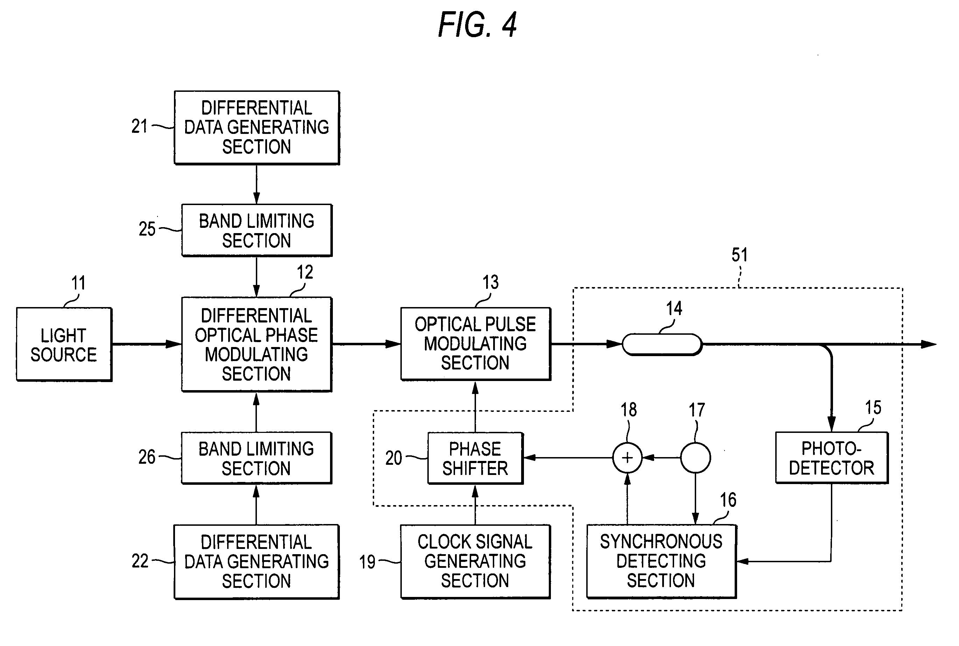

Moreover, Fig. 4 is a block diagram showing a structure according to another example of the optical transmitter in accordance with the invention. In Fig. 4, 11, 12, 13, 14, 15. 16, 17, 18, 19, 20, 21, 22 and 51 are the same reference numerals as those in Fig. 1, and 25 and 26 denote band limiting sections such as a driver amplifier for limiting a gain band.

A connecting relationship is almost the same as that in the example shown in Fig. 1 and is different in that the extending sections 23 and 24 are replaced with band limiting sections 25 and 26.

Description will be given to an operation according to the example shown in Fig. 4. Referring to the same operation as that in the example shown in Fig. 1, the description will be omitted.

Data signals (NRZ data signals) in opposite phases to each other are sent through the band limiting sections 25 and 26 so that an output light of the differential optical phase modulating section 12 is changed into a light signal in which a code transition time shown in Fig. 2B is extended. Moreover, the other operations are the same as those in the example shown in Fig. 1.

As a result, the code transition times of the data signals (the NRZ data signals) in the opposite phases to each other are extended by the band limiting section (extending section) to carry out a differential optical phase modulation. Furthermore, a phase shift amount of a clock signal is modulated with a dither signal and a part of an optical transmission output is converted into an electric signal to carry out a synchronous detection based on the dither signal, and the phase shift amount of the clock signal is controlled with a synchronous detection signal. Consequently, it is possible to synchronize the data signal and the clock signal with high precision.

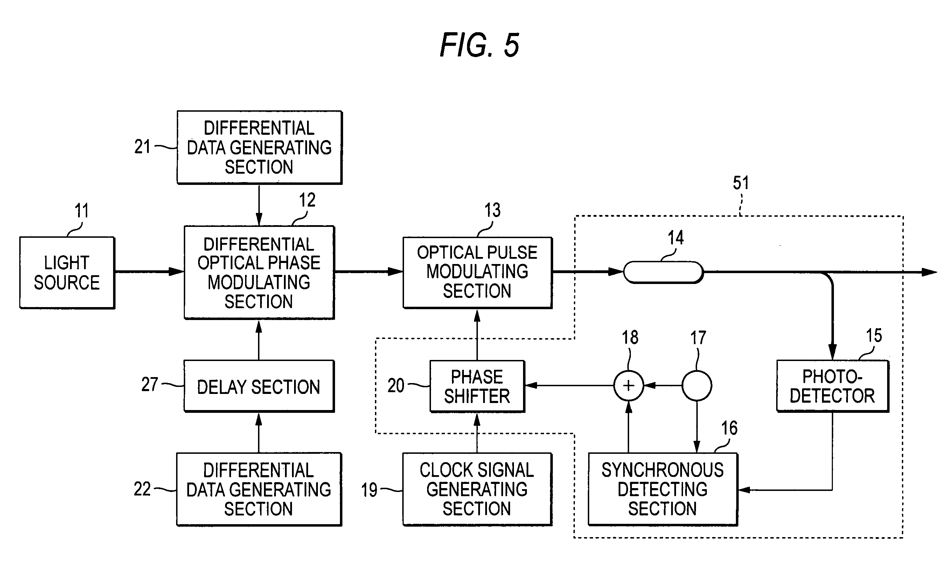

Moreover, Fig. 5 is a block diagram showing a structure according to a further example of the optical transmitter in accordance with the invention. In Fig. 5, 11, 12, 13, 14, 15, 16, 17, 18, 19, 20, 21, 22 and 51 are the same reference numerals as those in Fig. 1 and 27 denotes a delay section.

A connecting relationship is almost the same as that in the example shown in Fig. 1 and is different in that the extending section 23 is eliminated and the extending section 24 is replaced with the delay section 27.

Description will be given to an operation according to the example shown in Fig. 5. Referring to the same operation as that in the example shown in Fig. 1, the description will be omitted.

The delay section 27 gives a delay of a half bit or less to one of the data signals (the NRZ data signals) in opposite phases to each other, thereby applying a signal thus obtained to differential optical phase modulating section 12. Consequently, an output light of the differential optical phase modulating section 12 is changed into a light signal in which a code transition time shown in Fig. 2B is extended. Moreover, the other operations are the same as those in the example shown in Fig. 1.

As a result, the delay of a half bit or less is given to one of the data signals (the NRZ data signals) in the opposite phases to each other by the delay section to apply the signal thus obtained to the differential optical phase modulating section 12. Furthermore, a phase shift amount of a clock signal is modulated with a dither signal and a part of an optical transmission output is converted into an electric signal to carry out a synchronous detection based on the dither signal, and the phase shift amount of the clock signal is controlled with a synchronous detection signal. Consequently, it is possible to synchronize the data signal and the clock signal with high precision.

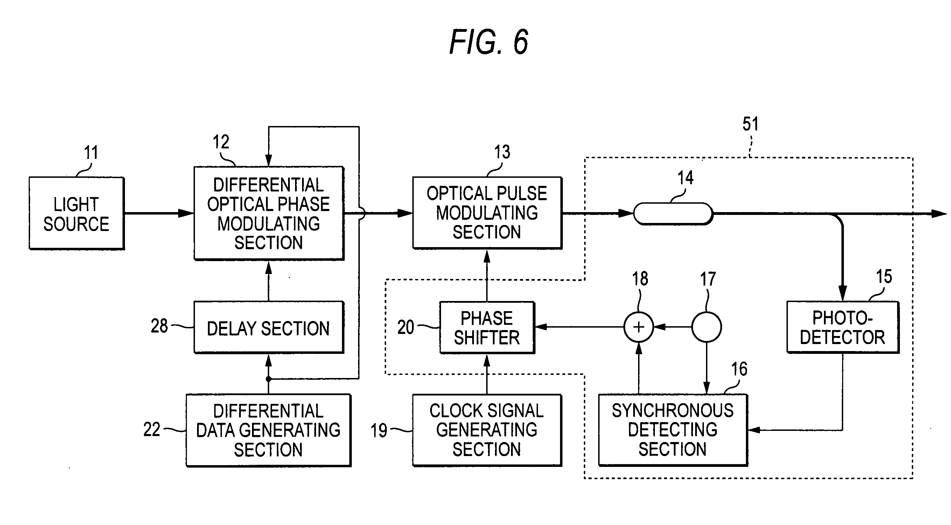

Moreover, Fig. 6 is a block diagram showing a structure according to a further example of the optical transmitter in accordance with the invention. In Fig. 6, 11, 12, 13, 14, 15, 16,17, 18, 19, 20, 22 and 51 are the same reference numerals as those in Fig. 1 and 28 denotes a delay section.

A connecting relationship is almost the same as that in the example shown in Fig. 1 and is different in that the differential data generating section 21 and the extending section 23 are eliminated and the extending section 24 is replaced with the delay section 28, and furthermore, an output of the differential data generating section 22 is directly applied to the other control input terminal of the differential optical phase modulating section 12.

Description will be given to an operation according to the example shown in Fig. 6. Referring to the same operation as that in the example shown in Fig. 1, the description will be omitted.

The delay section 28 applies, to the differential optical phase modulating section 12, a data signal (an NRZ data signal) to be an output of the differential data generating section 22 and a signal obtained by giving a delay of a half bit or less to the data signal (the NRZ data signal) so that an output light of the differential optical phase modulating section 12 is changed into a light signal in which a code transition time shown in Fig. 2B is extended. Moreover, the other operations are the same as those in the example shown in Fig. 1.

As a result, the data signal (the NRZ data signal) and the signal obtained by giving the delay of a half bit or less to the data signal (the NRZ data signal) through the delay section are applied to the differential optical phase modulating section 12 respectively. Furthermore, the phase shit amount of the clock signal is modulated with the dither signal, a part of an optical transmission output is converted into an electric signal to carry out a synchronous detection based on a dither signal, and a phase shift amount of a clock signal is controlled with a synchronous detection signal. Consequently, it is possible to synchronize the data signal and the clock signal with high precision.

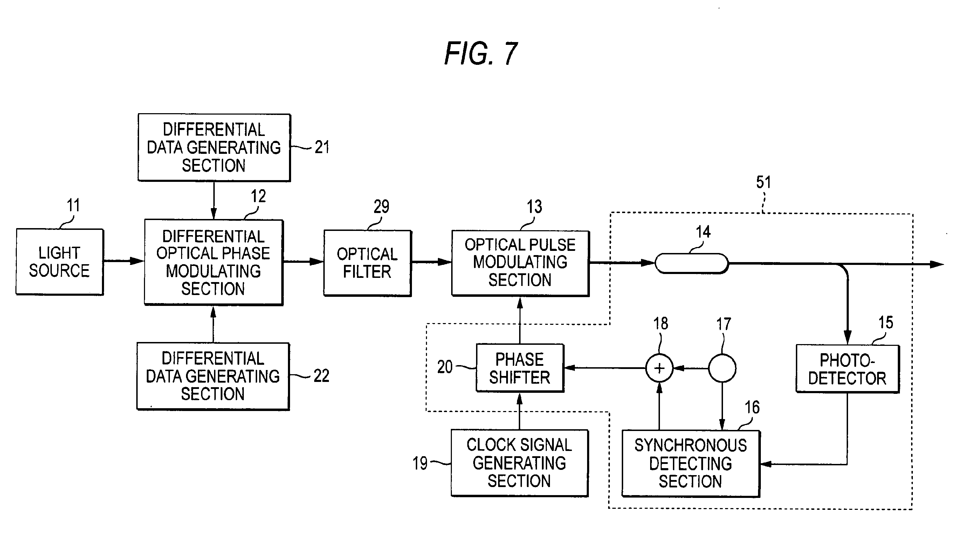

Moreover, Fig. 7 is a block diagram showing a structure according to a further example of the optical transmitter in accordance with the invention. In Fig. 7, 11, 12, 13, 14, 15, 16, 17, 18, 19, 20, 21, 22 and 51 are the same reference numerals as those in Fig. 1 and 29 denotes a narrow-band optical filter such as an optical filter in which a wavelength transmission curve is of a primary Gaussian type.

A connecting relationship is almost the same as that in the example shown in Fig. 1 and is different in that the extending sections 23 and 24 are eliminated and an optical filter 29 is provided between the differential optical phase modulating section 12 and the optical pulse modulating section 13.

Description will be given to an operation according to the example shown in Fig. 7. Referring to the same operation as that in the example shown in Fig. 1, the description will be omitted.

In data signals (NRZ data signals) in opposite phases to each other which are applied to the differential optical phase modulating section 12, a code transition time is not extended. Therefore, an output light of the differential light phase modulating section 12 is a light signal having the very small code transition time as shown in Fig. 2A. However, the output light of the differential optical phase modulating section 12 is changed into a light signal in which the code transition time is extended as shown in Fig. 2B through a narrow-band optical filter 29 in a subsequent stage. Moreover, the other operations are the same as those in the example shown in Fig. 1.

As a result, the code transition time of the output light of the differential optical phase modulating section is extended by the optical filter provided between the differential optical phase modulating section and the optical pulse modulating section. Furthermore, a phase shift amount of a clock signal is modulated with a dither signal and a part of an optical transmission output is converted into an electric signal to carry out a synchronous detection based on the dither signal, and a phase shift amount of a clock signal is controlled with a synchronous detection signal. Consequently, it is possible to synchronize the data signal and the clock signal with high precision.

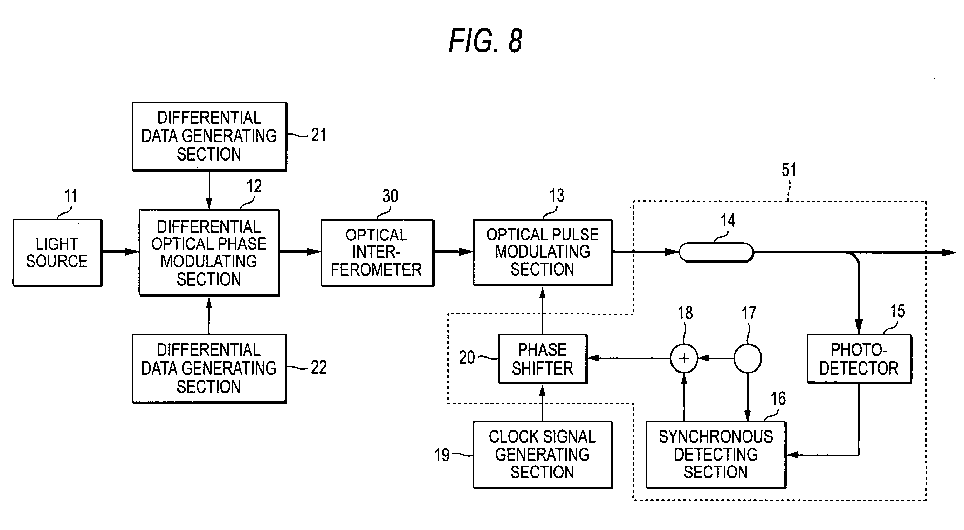

Moreover, Fig. 8 is a block diagram showing a structure according to a further example of the optical transmitter in accordance with the invention. In Fig. 8, 11, 12, 13, 14, 15, 16, 17, 18, 19, 20, 21, 22 and 51 are the same reference numerals as those in Fig. 1 and 30 denotes an optical interferometer such as an optical interferometer of a Mach-Zehnder type.

A connecting relationship is almost the same as that in the example shown in Fig. 1 and is different in that the extending sections 23 and 24 are eliminated and an optical interferometer 30 is provided between the differential optical phase modulating section 12 and the optical pulse modulating section 13.

Description will be given to an operation according to the example shown in Fig. 8. Referring to the same operation as that in the example shown in Fig. 1, the description will be omitted.

In data signals (NRZ data signals) in opposite phases to each other which are applied to the differential optical phase modulating section 12, a code transition time is not extended. Therefore, an output light of the differential optical phase modulating section 12 is a light signal having the very small code transition time as shown in Fig. 2A. However, the output light of the differential optical phase modulating section 12 is changed into a light signal in which the code transition time is extended as shown in Fig. 2B through the optical interferometer 30 in a subsequent stage. Moreover, the other operations are the same as those in the example shown in Fig. 1.

As a result, the code transition time of the output light of the differential optical phase modulating section is extended by the optical interferometer provided between the differential optical phase modulating section and the optical pulse modulating section. Furthermore, a phase shift amount of a clock signal is modulated with a dither signal and a part of an optical transmission output is converted into an electric signal to carry out a synchronous detection based on the dither signal, and a phase shift amount of a clock signal is controlled with a synchronous detection signal. Consequently, it is possible to synchronize the data signal and the clock signal with high precision.

In the example shown in Fig. 1, the phase shift amount of the clock signal is modulated with the dither signal and a part of the optical transmission output is converted into the electric signal to carry out the synchronous detection based on the dither signal, and the phase shift amount of the clock signal is controlled with the synchronous detection signal, thereby synchronizing the data signal with the clock signal. As a matter of course, however, it is also possible to synchronize the data signal with the clock signal by carrying out the modulation or the synchronous detection with the dither signal at the data signal side.

While the optical phase modulation and the optical pulse modulation are differentially carried out in the example shown in Fig. 1, furthermore, it is a matter of course that they do not need to be carried out differentially.

## Claims

1. An optical transmitter for carrying out an optical modulation based on a data signal to be transmitted, thereby generating a transmission light signal, comprising:
an optical phase modulating section for carrying out an optical phase modulation over an output light of a light source based on the data signal;
an optical pulse modulating section for carrying out an optical pulse modulation over an output light of the optical phase modulating section based on a clock signal and outputting the light as an optical transmission output;
an extending section for extending a code transition time of the data signal and applying the data signal to the optical phase modulating section; and
a phase control section for modulating a phase shift amount of the data signal or the clock signal with a dither signal and carrying out a synchronous detection over the optical transmission output, and controlling the phase shift amount with a synchronous detection signal.

2. The optical transmitter according to claim 1, wherein the optical phase modulating section carries out the optical phase modulation over the output light of the light source based on differential data signals in opposite phases to each other,
the optical pulse modulating section carries out the optical pulse modulation over the output light of the optical phase modulating section based on a differential clock signal and outputs the light as the optical transmission output,
the extending section includes two extending sections for extending code transition times of the differential data signals respectively and applying them to the optical phase modulating section, and
the phase control section includes two phase control sections for modulating the phase shift amount of the data signal or the clock signal with a dither signal, synchronously detecting the optical transmission output and controlling the phase shift amount with the synchronous detection signal.

3. The optical transmitter according to claim 1 or 2, wherein the extending section is a lowpass filter.

4. The optical transmitter according to claim 1 or 2, wherein the extending section is a driver amplifier for limiting a gain band.

5. An optical transmitter for carrying out an optical modulation based on a data signal to be transmitted, thereby generating a transmission light signal, comprising:
an optical phase modulating section for carrying out an optical phase modulation over an output light of a light source based on differential data signals in opposite phases to each other;
an optical pulse modulating section for carrying out an optical pulse modulation over an output light of the optical phase modulating section based on a differential clock signal and outputting the light as an optical transmission output;
a delay section for delaying one of the differential data signals and applying the differential data signal to the optical phase modulating section; and
two phase control sections for modulating a phase shift amount of the data signal or the clock signal with a dither signal, synchronously detecting the optical transmission output and controlling the phase shift amount with a synchronous detection signal.

6. An optical transmitter for carrying out an optical modulation based on a data signal to be transmitted, thereby generating a transmission light signal, comprising:
a delay section for delaying the data signal to generate a delay data signal;
an optical phase modulating section for carrying out an optical phase modulation over an output light of a light source based on the data signal and the delay data signal;
an optical pulse modulating section for carrying out an optical pulse modulation over an output light of the optical phase modulating section based on a differential clock signal and outputting the light as an optical transmission output; and
two phase control sections for modulating phase shift amounts of the data signal and the delay data signal or the clock signal with a dither signal and carrying out a synchronous detection over the optical transmission output, and controlling the phase shift amount with a synchronous detection signal.

7. An optical transmitter for carrying out an optical modulation based on a data signal to be transmitted, thereby generating a transmission light signal, comprising:
an optical phase modulating section for carrying out an optical phase modulation over an output light of a light source based on a data signal;
an optical pulse modulating section for carrying out an optical pulse modulation over an output light of the optical phase modulating section based on a clock signal and outputting the light as an optical transmission output;
an optical filter or an optical interferometer which is provided between the optical phase modulating section and the optical pulse modulating section; and
a phase control section for modulating a phase shift amount of the data signal or the clock signal with a dither signal and carrying out a synchronous detection over the optical transmission output, and controlling the phase shift amount with a synchronous detection signal.

8. The optical transmitter according to claim 7, wherein the optical phase modulating section carries out the optical phase modulation over the output light of the light source based on differential data signals in opposite phases to each other,
the optical pulse modulating section carries out the optical pulse modulation over the output light of the optical phase modulating section based on a differential clock signal and outputs the light as the optical transmission output, and
the phase control section includes two phase control sections for modulating the phase shift amount of the data signal or the clock signal with the dither signal, synchronously detecting the optical transmission output and controlling the phase shift amount with the synchronous detection signal.
